# EUROPEAN PATENT SPECIFICATION

(11) **EP 3 098 447 B1**
(45) Date of publication and mention of the grant of the patent: **27.09.2017**
(21) Application number: 16176796.7
(22) Date of filing: 04.11.2015
(51) Int. Cl.: F04B 17/00, F04D 13/06, H02P 27/00, H02M 3/04, H02M 7/44, H02J 7/35

(54) **SYSTEM FOR WATER SUPPLY USING SUNLIGHT**
WASSERVERSORGUNGSSYSTEM MITTELS SONNENLICHT
SYSTÈME D'ALIMENTATION EN EAU PAR LA LUMIÈRE SOLAIRE

(30) Priority: 18.11.2014 KR 20140161089
(43) Date of publication of application: 30.11.2016
(62) Divisional of application: 15192914.8
(73) Proprietor: LSIS Co., Ltd., Gyeonggi-Do 14119 (KR)
(72) Inventor: LAWRENCE, Waithiru Charles, 14119 Anyang-si, Gyeonggi-do (KR)
(74) Representative: Lang, Johannes

(56) References cited:
- WO-A2-2013/093654
- DE-A1-102006 039 695
- US-A- 4 636 931
- US-A- 5 106 495
- US-A- 5 569 998
- US-B1- 6 590 793
- US-B2- 6 863 827

## Description

### BACKGROUND OF THE INVENTION

### 1. Field of the Invention

The present invention relates to a water supply system using sunlight, and particularly to a water supply system using sunlight, continuously using a water supply pump regardless amounts of the lights from the sun.

### 2. Description of the Conventional Art

Generally, generating solar energy can be made through multiple steps, comprising collecting solar energy through solar cell panel, generating a direct current (DC) when a voltage difference is induced in the solar cell panel by the collected solar energy, and converting the DC to alternating current (AC) by using a power converter.

Such a solar energy generating requires high facility costs, but it can have high energy efficiency without the need of additional fuel once the facility was built up, and it is semi-permanently operable.

Therefore, solar energy generation system has been used in various technical advanced fields of the industry, such as a system of supplying self-generated energy to the places where a reliable electrical power supply has been problematic.

Among those fields, facilities of solar energy generating pump have been built for supplying drinking water, agricultural water, or water for stock farming in a remote area.

The facility for the solar energy generation can supply water to meet the needs of places by running AC motor driven by an AC that has been generated and converted by the solar energy generation system.

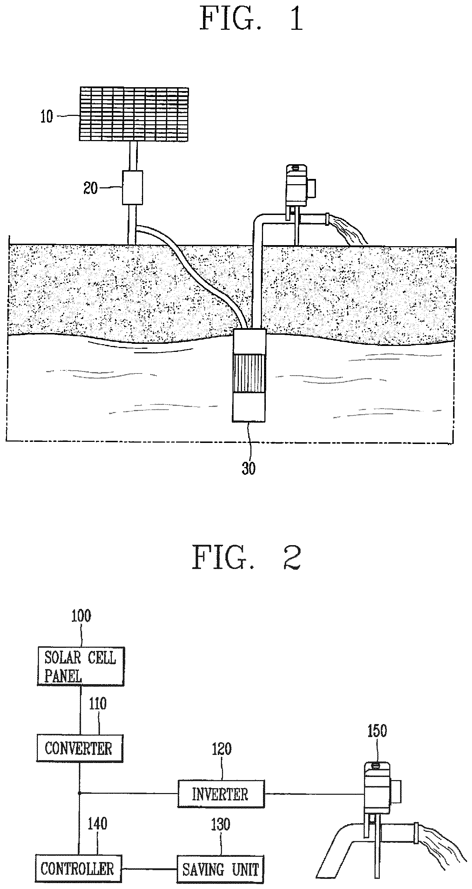

Fig.1 illustrates a schematic representation of a typical water supply system using solar energy.

As shown in Fig.1, a conventional water supply system using sunlight comprises a solar cell panel (10) to generate currents using concentrated sunlight, a controller (20) to drive a pump (30) using the current that has been generated by the solar cell panel (10), and a pump (30) to supply water corresponding to control of the controller (20).

Such a conventional water supply system using sunlight generates currents using concentrated sunlight collected by the solar cell panel (10) comprising a plurality of solar cells (not shown); then, the controller (20) drives a pump by supplying the currents generated by solar cell panel (10) such that the places, like rice paddy or farming fields, can have adequate water supplied by the pump (30).

However, the conventional water supply system using sunlight is not able to store current that has been generated by solar cell panel (10) separately. Also, this system cannot store energy to use later, the energy left over after running the pump. As such, this type of solar system has an energy efficiency problem.

Besides, this convention solar system (30) is only available to drive the pump (30) during the daytime, especially when a large amount of sunlight takes place. The system is not available to run during the nighttime when the amount of sunlight is relatively small; therefore the water supply time using this system is limited. Documents US6590793, US5106495, US6863827, DE102006039695 and US4636931 disclose water supply systems with solar cells and electricity storage in batteries.

### SUMMARY OF THE INVENTION

The present invention has been made to solve the foregoing disadvantages of the prior art and therefore an object of certain embodiments of the present disclosure is to provide water supply system using sunlight that is capable to supply water to its respective area by steadily driving a pump.

The objective of the invention is solved by providing a water supply system using sunlight comprising a solar cell panel configured to generate direct current (DC) by collecting concentrated sunlight; a converter configured to amplify and output the generated DC from the solar cell panel; an inverter configured to convert the DC outputted from the converter to output an alternating current (AC); a temperature sensor configured to sense an atmosphere temperature; a controller configured to supply the AC outputted from the inverter to a pump when a temperature sensed by the temperature sensor is lower than a reference temperature, and to control to store a preset amount of the current that has been generated by the solar cell panel into a saving unit when the temperature sensed is higher than the reference temperature; a saving unit configured to store the preset amount of the DC generated by the solar cell panel according to a control of the controller; and a pump configured to supply water upon receiving the AC from the inverter.

Preferably, but not necessarily, the controller is configured to convert DC current to AC current by supplying the DC current stored in the saving unit to the inverter, and to supply the converted AC current to the pump, when temperature sensed by the temperature sensor drops below a preset temperature. The claimed water supply system has the technical effect of steadily driving the motor without time restriction by supplying the stored energy to the motor even during nighttime or early morning when the an amount of sunlight is relatively small.

Also, the claimed water supply system has another technical effect of improving agricultural productivity by efficiently supplying water to the agricultural foods without any time restriction.

### BRIEF DESCRIPTION OF THE DRAWING

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a schematic view of illustrating water supply system using sunlight according to prior art;
FIG. 2 is a block diagram illustrating the water supply system using sunlight according to one exemplary embodiment not covered by the present invention;
FIG. 3 is a block diagram illustrating the water supply system using sunlight according to another exemplary embodiment of the present invention; and
FIG. 4 is a flow chart illustrating a water supply method using sunlight according to one exemplary embodiment not covered by the present invention.

### DETAILED DESCRIPTION OF THE PREPERRED EMBODIMENT

An exemplary embodiment will be described more fully hereinafter with reference to the accompanying drawings, in which exemplary embodiment is shown.

FIG. 2 is a block diagram illustrating the water supply system using sunlight according to one exemplary embodiment not covered by the present disclosure.

As shown in FIG. 2, the claimed water supply system using sunlight comprises solar cell panel (100), a converter (110), an inverter (120), a controller (140), a saving unit (130), and a pump (150).

The solar cell panel (100) is configured to generate a direct current (DC) by colleting solar energy. Here, an amount of the DC generated by the solar cell panel (100) by collected concentrated sunlight is either increased or deceased depending on the amount of solar energy radiated by the sun.

The converter (110) is configured to amplify and output the DC generated from the solar cell panel (100), changing the level of the DC to be suitable to drive the pump (150).

The inverter (120) is configured to convert the DC outputted from the converter (110) to an alternating current (AC) to drive AC motor of the pump (150).

The controller (140) is configured to measure an amount of the DC generated from the solar cell panel (100) so as to supply the AC outputted from the inverter (120) to a pump (150) when an amount of the DC measured is less than a reference current value (the maximum amount of current need to drive an AC motor installed within the pump (150)).

Also, when the amount of the DC measured exceeds the reference current value, the controller (140) is configured to control to store an amount of a portion of the DC exceeding the reference current value into a saving unit while converting a portion of the DC not exceeding the reference current value to an AC through the inverter (120) so as to drive an AC motor of the pump (150).

Here, when an amount of direct current (DC) generated by the solar panel (100) is both below a reference value and below a preset amount (the amounts of current for normally running an AC motor of the pump (150)), the controller (140) is configured to supply a residual direct current (DC) that has been stored in the saving unit (130) to the inverter (120) so as to convert the residual DC to AC that is to outputted to drive an AC motor of the pump (150) supplying water.

The saving unit (130) is configured to store the amount of the portion of the DC exceeding the reference current value when an amount of currents generated by the solar cell panel (100) exceeds a reference value; and, the pump (150) is configured to supply water to a desired place in need of the water according to an AC mother that receiving AC (power) from the inverter (120).

According to the present exemplary water supply system not covered by the invention when a current is generated by a solar cell panel (100) using solar energy collected, the system can use this current either to drive a pump (150) or to store a residual current that was left over after running the pump into a saving unit (130), and therefore the current left over can be efficiently managed. This residual current can be stored separately, and then it can be used later; therefore, the present exemplary water supply system not covered by the invention improves energy efficiency.

Also, it has been a hardship to run a pump (150) during the nighttime or the beginning of morning because an amount of sunlight during those time periods is relatively smaller than other time periods. However, the claimed water supply system is configured to run the motor steadily without any time restriction. The claimed invention can supply the stored energy to run a pump (150) for supplying water regardless of the amounts of sunlight.

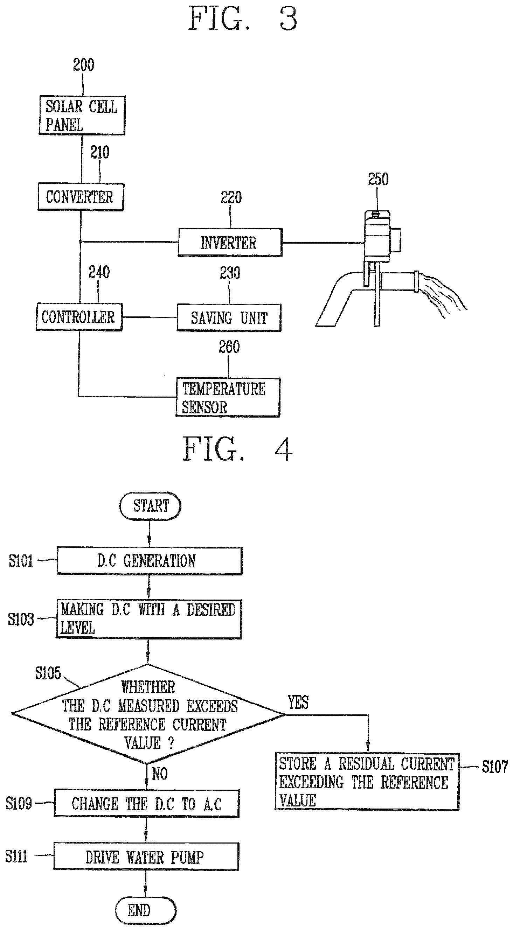

On the other hand, FIG. 3 is a block diagram illustrating the water supply system using sunlight according to the exemplary embodiment of the present disclosure.

As shown in FIG. 3, the present invention according to the second exemplary embodiment, the water supply system comprises a solar cell board (200), a converter (210), an inverter (220), a temperature sensor (260), a controller (240), a saving unit (230), and a pump (250).

The solar cell board (200) is configured to generate direct current (DC) by colleting solar energy, and the converter (210) is configured to amplify and output the DC generated from the solar cell panel (200), making the DC with a desired level.

Also, the inverter (220) is configured to convert the DC outputted from the converter (210) to an alternating current (AC) to drive AC motor of the pump (250).

The temperature sensor (260) is configured sense a temperature of atmosphere, and the controller (240) is configured to run the pump (150) based the sensed temperature by the temperature sensor (260).

The controller (240) is configured to supply the AC outputted from the inverter (220) to the pump (250) when a temperature sensed by the temperature sensor (260) is lower than a reference temperature. The controller (240) is also configured to control to store an amount of the current exceeding an amount of the current generated at a reference temperature into a saving unit (230) when the temperature sensed is higher than the reference temperature.

Here, the reference current value can be set based on the size of the rice paddy or farming fields. For instance, when a size of land that needs water supply is large, a reference temperature will be set high so that a great amount of supplying current corresponding to the reference temperature will be set. In the same way, when the size of land that needs water supply is small, a reference temperature will be set low so that a small amount of supplying current corresponding to the reference temperature will be set.

Also, the controller (240) is configured to supply the DC that has been stored in the saving unit (230) to the inverter (220) so as to convert the DC stored into an AC and then supply the AC to the pump (250) such that water supply is available through the pump (250) when an atmosphere temperature drops below a reference temperature and when the atmosphere temperature drops below a preset temperature (a temperature incapable of collecting solar energy to run a pump).

Also, the saving unit (230) is configured to store a residual current according to a control of the controller (240), and the pump (250) is configured to supply water to places, like rice pay or farming lands, upon receiving alternating current from the inverter (220).

FIG. 4 shows the detail steps of water supplying using sunlight according to one exemplary embodiment not covered by the present invention.

Most of all, a solar cell panel (100) generates direct current (DC) by collecting concentrated sunlight, and the generated DC current is converted to be output from a converter (110).

The outputted amplified current is then converted to an alternative current by an inverter (120) and then the converted AC is supplied to a pump (150).

Here, a controller (140) measures current generated by a solar cell panel (100). And, when an amount of the DC measured is less than a reference current value, the controller (140) supplies the generated current to the inverter (120), change it to alternative current (AC), and then supply the AC to a pump (150). Or, when the amount of the DC measured exceeds the reference current value, the controller (140) stores a residual current that exceeds the reference value to saving unit (130) separately.

Also, when an amount of direct current (DC) generated by the solar panel (200) is below a reference value and when the amount becomes below a preset amount of current, the controller (240) can supply a direct current that has been stored in the saving unit (230) to a pump (150). As such, the exemplary embodiment not covered by the invention can continuously drive the pump (150) regardless of an amount of the radiated solar energy from sunlight.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A water supply system using sunlight comprising:
a solar cell panel (200) configured to generate direct current (DC) by collecting concentrated sunlight;
a converter (210) configured to amplify and output the generated DC from the solar cell panel;
an inverter (220) configured to convert the DC outputted from the converter (210) to output an alternating current (AC);
a temperature sensor (260) configured to sense an atmosphere temperature;
a controller (240) configured to supply the AC outputted from the inverter (220) to a pump when a temperature sensed by the temperature sensor (260) is lower than a reference temperature, and to control to store a preset amount of the current that has been generated by the solar cell panel into a saving unit (230) when the temperature sensed is higher than the reference temperature;
a saving unit (230) configured to store the preset amount of the DC generated by the solar cell panel (230) according to a control of the controller (240); and
a pump (250) configured to supply water upon receiving the AC from the inverter (220).

2. The water supply system using sunlight of claim 1, wherein, the controller (240) is configured to supply the DC that has been stored in the saving unit (230) to the inverter (220) so as to convert the DC stored into an AC and then supply the AC to the pump (250) when a temperature sensed by the temperature sensor (260) drops below a preset temperature.

## Patentansprüche

1. Wasserversorgungssystem, das Sonnenlicht verwendet, umfassend:
ein Solarzellenpaneel (200), das eingerichtet ist, um einen Gleichstrom (DC) zu erzeugen, indem konzentriertes Sonnenlicht gesammelt wird;
einen Konverter (210), der eingerichtet ist, um den erzeugten DC von dem Solarzellenpaneel zu verstärken und auszugeben;
einen Inverter (220), der eingerichtet ist, um den DC, welcher von dem Konverter (210) ausgegeben wird, zu konvertieren, um einen Wechselstrom (AC) auszugeben;
einen Temperatursensor (260), der eingerichtet ist, um eine Atmosphärentemperatur zu messen;
einen Controller (240), der eingerichtet ist, um den AC, welcher von dem Inverter (220) ausgegeben wird, an eine Pumpe zu liefern, wenn eine Temperatur, die durch den Temperatursensor (260) gemessen wird, niedriger als eine Referenztemperatur ist, und um zu steuern, dass ein voreingestellter Betrag des Stroms,
welcher durch das Solarzellenpaneel erzeugt wurde, in eine Speichereinheit (230) gespeichert wird, wenn die gemessene Temperatur höher ist als die Referenztemperatur;
eine Speichereinheit (230), die eingerichtet ist, um den voreingestellten Betrag des DC, welcher durch das Solarzellenpaneel (230) erzeugt wird, gemäß einer Steuerung des Controllers (240) zu speichern; und
eine Pumpe (250), die eingerichtet ist, um beim Empfangen des AC von dem Inverter (220) Wasser zu liefern.

2. Wasserversorgungssystem, das Sonnenlicht verwendet, nach Anspruch 1, wobei der Controller (240) eingerichtet ist, um den DC, welcher in der Speichereinheit (230) gespeichert wurde, dem Inverter (220) zu liefern, um den gespeicherten DC in einen AC zu konvertieren und dann den AC der Pumpe (250) zu liefern, wenn eine Temperatur, die durch den Temperatursensor (260) gemessen wird, unter eine voreingestellte Temperatur fällt.

## Revendications

1. Un système de fourniture d'eau utilisant la lumière solaire, comprenant :
un panneau de cellules solaires (200) configuré pour générer du courant continu (CC) par recueil de lumière solaire concentrée ;
un convertisseur (210) configuré pour amplifier et délivrer en sortie le CC généré à partir du panneau de cellules solaires ;
un onduleur (220) configuré pour convertir le CC délivré en sortie du convertisseur (210) pour délivrer en sortie un courant alternatif (CA) ;
un capteur de température (260) configuré pour mesurer une température atmosphérique ;
un contrôleur (240) configuré pour alimenter une pompe avec le CA délivré en sortie de l'onduleur (220) lorsqu'une température mesurée par le capteur de température (260) est inférieure à une température de référence, et pour contrôler le stockage d'une quantité prédéterminée du courant qui a été généré par le panneau de cellules solaires dans une unité de sauvegarde (230) lorsque la température mesurée est supérieure à la température de référence ;
une unité de sauvegarde (230) configurée pour stocker la quantité prédéterminée du CC généré par le panneau de cellules solaires (200) en fonction d'un contrôle du contrôleur (240); et
une pompe (250) configurée pour fournir de l'eau sur réception du CA provenant de l'onduleur (220).

2. Le système de fourniture d'eau utilisant la lumière solaire de la revendication 1, dans lequel le contrôleur (240) est configuré pour délivrer le CC qui a été stocké dans l'unité de sauvegarde (230) à l'onduleur (220) de manière à convertir le CC stocké en un CA puis délivrer le CA à la pompe (250) lorsqu'une température mesurée par le capteur de température (260) chute au-dessous d'une température prédéterminée.
